(19) Europäisches Patentamt / European Patent Office / Office européen des brevets

(11) **EP 2 040 256 A1**

(12) **DEMANDE DE BREVET EUROPEEN**

(43) Date de publication:
**25.03.2009 Bulletin 2009/13**

(51) Int Cl.:
*G11B 7/0065* (2006.01)  *G11B 7/14* (2006.01)
*G03H 1/12* (2006.01)  *G03H 1/26* (2006.01)
*G11C 13/04* (2006.01)

(21) Numéro de dépôt: **08290894.8**

(22) Date de dépôt: **23.09.2008**

(84) Etats contractants désignés:
**AT BE BG CH CY CZ DE DK EE ES FI FR GB GR
HR HU IE IS IT LI LT LU LV MC MT NL NO PL PT
RO SE SI SK TR**
Etats d'extension désignés:
**AL BA MK RS**

(30) Priorité: **24.09.2007 FR 0706673**

(71) Demandeur: **Commissariat à l'Energie Atomique
75015 Paris (FR)**

(72) Inventeur: **Martinez, Christophe
38100 Grenoble (FR)**

(74) Mandataire: **Priori, Enrico et al
Cabinet Orès
36, rue de St. Pétersbourg
75008 Paris (FR)**

(54) **Dispositifs d'enrigestrement et de lecture de données sur un support de stockage holographique**

(57) Dispositif d'enregistrement (E) de données sur un support de stockage holographique (9B), comportant des moyens pour générer un faisceau objet (2) encodé par modulation spatiale avec les données à enregistrer, ainsi que des moyens pour générer un faisceau de référence (1) modulé spatialement suivant des configurations prédéterminées pour réaliser un multiplexage des données, comprenant un support d'enregistrement optique (11) sur lequel est réalisée une succession d'éléments optiques diffractifs (12), introduisant chacun une configuration de modulation distincte du faisceau de référence (1).

Dispositif de lecture (L) des données ainsi enregistrées, utilisant un support d'enregistrement optique (11) du même type pour la génération et la modulation spatiale d'un faisceau de lecture (1 b).

Dispositif de réplication (R) d'un premier support de stockage holographique (9A) sur un deuxième support holographique (9B), constitué par un tel dispositif de lecture couplé à un tel dispositif d'enregistrement.

FIG.11a

## Description

L'invention porte sur un dispositif d'enregistrement de données sur un support de stockage holographique et sur un dispositif de lecture desdites données. L'invention porte également sur un dispositif de duplication d'un support de stockage holographique de données.

Les mémoires holographiques sont sérieusement envisagées comme pouvant constituer la prochaine génération de supports (ou média) de stockage de masse. En effet, elles présentent des atouts considérables :

- D'abord, une très grande densité de stockage, car l'enregistrement des données se fait en volume, et pas seulement sur une surface comme dans le cas des média de stockage classiques par disque optique (CD, DVD, HD-DVD et BluRay). De plus, des techniques de muiiipiexage permettent d'enregistrer dans un même volume holographique une pluralité de blocs de données et de les adresser individuellement. Ainsi, on considère que des disques optiques de type holographique pourraient, dans un avenir proche, atteindre des capacités dépassant les 1000 Go (giga-octets), contre 50 Go pour les disques BluRay double niveaux.

- Ensuite, une vitesse de lecture des données très élevée. En effet, dans le cas des média classiques de stockage optique, les données sont lues bits à bits par le défilement d'un point lumineux sur la surface du disque. Dans le cas d'une mémoire holographique, la lecture en volume génère une succession de fronts d'ondes qui encodent des blocs ou « pages » de données, qui peuvent être acquises simultanément. Les taux de lecture prévus sont de l'ordre de 1000 Mbits/s (Mégabits par seconde) en comparaison des 72 Mbits/s pour le format BluRay.

Un aperçu général de la technologie de stockage holographique des données peut être trouvé sur le site des principaux industriels du domaine (www.aprilisinc.com et www.inphase-technologies.com)...

D'une manière générale, pour réaliser un hologramme, deux faisceaux lumineux mutuellement cohérent (issus d'une même source laser), dits faisceau objet et faisceau de référence, sont superposés au sein d'un matériau photosensible. Au niveau du recouvrement des faisceaux, une figure d'interférences est crée et enregistrée dans le volume photosensible. Pour lire l'hologramme, il est nécessaire de l'éclairer avec un faisceau de lecture identique au faisceau de référence (ou à son complexe conjugué). La diffraction de ce faisceau de lecture par l'hologramme engendre une réplique du faisceau objet.

La théorie de l'holographie est expliquée au chapitre 8 de l'ouvrage de J. W. Goodman, « Introduction to Fourier Optics », 1ére édition, McGraw-Hill Book Company.

Pour enregistrer de l'information dans un hologramme, il suffit de coder ladite information sous la forme d'une modulation spatiale (de phase et/ou d'amplitude) du faisceau objet, puis d'utiliser un faisceau de référence dont ies propriétés sont connues. Un comprend que la reconstruction du faisceau objet permet la lecture simultanée de toutes les données codées.

La modulation spatiale du faisceau objet peut être réalisée, d'une manière connue en soi, par un modulateur spatial de lumière (SLM) à cristaux liquides (on peut trouver des références référence à des SLM de ce type chez le fabricant DisplayTech : www.displaytech.com) ou à micro-miroirs (par exemple, la matrice de micro-miroirs DLP développée par Texas Instrument : www.dlp.com).

Une densité de stockage importante est obtenue grâce à des techniques de multiplexage. En effet, il est possible de superposer, dans un même volume photosensible, une pluralité d'hologrammes distincts, enregistrés à partir de faisceaux objet et de référence différents. Lorsque ledit volume photosensible est éclairé par un faisceau de lecture identique à l'un des faisceaux de référence utilisés pour l'enregistrement des hologrammes, seul le faisceau objet correspondant est reproduit (affecté par un bruit de fond provoqué par les autres hologrammes). C'est cette propriété qui permet aux mémoires holographiques d'atteindre des densités de stockage aussi élevées.

Plusieurs techniques de multiplexage holographique sont connues de l'art antérieur. On peut citer en particulier le codage en phase et le codage en angle.

La technique du codage en phase est décrite par exemple par l'article de S. Yasuda et al. « Coaxial holographic data storage without recording the de components », Opt. Lett. 2006 31 (17) pp 2607-2609, ou encore auprès de la référence : Z. Karpati et al. « Comparison of coaxial holographic storage arrangements from the M number consumption point of view », Jpn. J. Appl Phys 46 (2007) 3845-3849. Elle consiste à utiliser des faisceaux de référence (et donc des faisceaux de lecture) modulés spatialement en phase selon des configurations de modulation sensiblement orthogonales entre elles.

L'orthogonalité du codage de phase permet d'éviter la diaphonie de lecture entre l'hologramme codé par un faisceau de référence et la diffraction du faisceau de lecture correspondant à ce même faisceau de référence par les autres hologrammes. Si on note $[\varphi_1^m, \varphi_2^m, \varphi_3^m, ... \varphi_n^m]$ les composantes de phase du faisceau de référence m ($\varphi = 0$ ou $\pi$), alors la condition d'orthogonalité peut s'exprimer par la relation suivante décrite par C. Denz et al. « Potentialities and limitations of hologram multiplexing by using the phase-encoding technique » Appl. Opt. 31 (1992) pp 5700 - 5705 :

$$\sum_n \exp\left[j\left(\varphi_n^p - \varphi_n^m\right)\right] = \left| \begin{array}{ll} 0 & si \ \ p \neq m \\ 1 & si \ \ p = m \end{array} \right.$$

Cette relation exprime le fait que deux faisceaux de référence interfèrent de manière destructive s'ils sont différents.

La modulation spatiale des faisceaux de référence et de lecture est obtenue grâce à des modulateurs spatiaux de lumière (SLM) à cristaux liquides ou à micromiroirs. Ces dispositifs sont couteux, et si leur présence peut être tolérable dans un système d'écriture de données (qui, du moins initialement, peut rester un équipement professionnel ou semi-professionnel), elle l'est beaucoup moins dans les systèmes de lectures destinés au grand public. En outre, la faible fréquence de fonctionnement des SLM (quelques centaines de Hertz) limite fortement la vitesse d'écriture et de lecture des données.

La technique de codage en angle est connue, par exemple, du document US 6700686. Elle consiste à utiliser des faisceaux de référence (et donc des faisceaux de lecture) qui sont incidents sur le matériau photosensible suivant des angles différents. Pour ce faire, un dispositif d'enregistrement et/ou de lecture de données peut utiliser un système optique comprenant un miroir pivotant, un modulateur acousto-optique ou une lentille mobile en translation. Dans tous les cas, on aboutit à des systèmes relativement complexes - et donc couteux - et lents. Par exemple, si un miroir pivotant est utilisé pour déterminer la direction du faisceau de référence / de lecture, son mouvement devra être contrôlé de manière fine.

On remarquera que le multiplexage en angle peut être considéré comme un cas particulier de multiplexage en phase, dans lequel toutes les configurations de modulation introduisent un déphasage linéaire distinct du faisceau lumineux.

Les autres techniques de multiplexage et démultiplexage présentent des inconvénients similaires : elles nécessitent des équipements relativement complexes et couteux, et ne permettent pas d'exploiter de manière optimale les potentialités du stockage holographique en ce qui concerne la vitesse de lecture.

De plus, la réplication des « disques holographiques » est lente et couteuse. En effet, les technologies de pressage ou moulage qui ont permis l'émergence des différentes générations de disques optiques ne s'appliquent pas aux mémoires holographiques, car le stockage des données se fait en volume et non plus en surface. Or les profondeurs du média ne sont pas accessibles lors du pressage.

Tous ces inconvénients ont fortement ralenti la percée commerciale du stockage holographique des données.

Un but de l'invention est de résoudre au moins certains des problèmes posés par l'art antérieur.

Pour atteindre ce but, l'invention repose sur le codage du faisceau de référence et/ou de lecture par un objet de type support d'enregistrement optique, présentant une structuration réalisant une succession d'éléments optiques diffractifs, chacun desdits éléments introduisant une configuration de modulation distincte dudit faisceau. Le mouvement de cet objet permet ainsi, par le balayage des éléments optiques diffractifs, une modification séquentielle et répétable du front d'onde du faisceau de référence ou de lecture. De manière privilégiée, l'objet est un disque pouvant être mis en rotation dans le trajet du faisceau de référence. Les techniques de réplication couramment utilisées dans le domaine du stockage optique peuvent être employées afin de permettre une fabrication peu coûteuse et en grande série de cet objet.

Le recours, pour le multiplexage et le démultiplexage, à un tel objet - appelé par la suite « disque de codage » - rend possible la réalisation de dispositifs d'écriture et de lecture de données sur des supports holographiques ayant une structure simple, présentant un coût réduit et pouvant néanmoins opérer à une vitesse (débit de données) très élevée. L'utilisation combinée d'un dispositif de lecture et d'un dispositif d'écriture selon l'invention permet la réplication de « disques holographiques » dans des conditions économiquement viables.

Plus précisément, un objet de l'invention est un dispositif d'enregistrement de données sur un support de stockage holographique, comportant : des moyens de génération d'un premier faisceau de lumière, dit faisceau de référence, et d'un deuxième faisceau de lumière, dit faisceau objet, lesdits faisceaux étant mutuellement cohérents ; un moyen pour moduler spatialement ledit faisceau objet, la modulation ainsi introduite étant représentative d'un bloc de données à enregistrer ; un moyen pour moduler spatialement, d'une manière prédéterminée, ledit faisceau de référence ; et un système optique pour superposer les faisceaux objet et de référence, modulés spatialement, au niveau d'une plage de stockage de données dudit support de stockage holographique, pour y enregistrer la figure d'interférence qui en résulte ; lesdits moyens pour moduler spatialement lesdits faisceaux objet et de référence étant synchronisés pour enregistrer une pluralité de blocs de données sur ladite plage de stockage de données, chaque bloc étant associé à une configuration de modulation distincte du faisceau de référence, de manière à réaliser un multiplexage desdits blocs de données ; le dispositif de l'invention étant caractérisé en ce que ledit moyen pour moduler spatialement ledit faisceau de référence comprend un support d'enregistrement optique sur lequel est réalisée une succession d'éléments optiques diffractifs, introduisant chacun une dite configuration de modulation distincte, ainsi qu'un premier actionneur pour déplacer ledit support d'enregistrement optique afin d'amener de manière séquentielle lesdits éléments optiques diffractifs sur la trajectoire du faisceau de référence.

Selon des modes de réalisation particuliers de l'invention :

- Chacun des éléments optiques diffractifs introduisant une modulation du faisceau de référence peut être un réseau de diffraction pour dévier ledit faisceau suivant un angle différent de manière à réaliser un multiplexage en angle desdits blocs de données sur ladite plage de stockage.
- De manière alternative, chacun des éléments optiques diffractifs introduisant une modulation du faisceau de référence peut être adapté pour introduire une modulation de l'amplitude complexe dudit faisceau sans modifier sensiblement sa direction de propagation, les configurations de modulation introduites par lesdits éléments optiques diffractifs étant sensiblement orthogonales entre elles de manière à réaliser un multiplexage en phase et/ou en amplitude desdits blocs de données sur ladite plage de stockage.
- Lesdits faisceaux objet et de référence peuvent être des faisceaux impulsionnels synchronisés avec le déplacement dudit support d'enregistrement optique de manière à être éteints lors des transitions desdits éléments optiques diffractifs.
- Ledit support d'enregistrement optique peut être un disque pouvant être actionné en rotation autour d'un axe, lesdits éléments optiques diffractifs étant agencés circulairement autour dudit axe.
- Ce support d'enregistrement optique en forme de disque peut comporter des structurations pour synchroniser le moyen de modulation spatiale du faisceau objet avec son mouvement de rotation.
- Les configurations de modulation introduites par lesdits éléments optiques diffractifs peuvent être monodimensionnelles dans la direction de rotation du support d'enregistrement optique en forme de disque.
- En variante, chacun desdits éléments optiques diffractifs peut être décomposé en une pluralité de sections successives dont l'orientation varie pour compenser l'effet de la rotation dudit support d'enregistrement optique en forme de disque.
- Le support de stockage holographique peut comporter une pluralité des plages de stockage de données, le dispositif comportant également un deuxième actionneur, synchronisé avec lesdits moyens pour moduler spatialement les faisceaux objet et de référence, pour amener de manière séquentielle lesdites plages au niveau de la région où lesdits faisceaux se superposent et interfèrent.
- Ledit support de stockage holographique peut être un disque pouvant être actionné en rotation autour d'un axe et en translation perpendiculairement audit axe, lesdites plages de stockage de données étant agencées en une pluralité de pistes concentriques circulaires ou en spirale dont le centre coïncide avec ledit axe.
- Ledit support d'enregistrement optique peut être un disque pouvant être actionné en rotation autour d'un axe et comportant une pluralité de pistes circulaires concentriques, dont le centre coïncide avec ledit axe, chacune desdites pistes contenant une succession d'éléments optiques diffractifs, le dispositif comportant également : un moyen pour générer et moduler spatialement une pluralité de faisceaux objet ; des moyens pour générer un nombre égal de faisceaux de références, chacun desdits faisceaux de référence étant dirigé de manière à traverser l'une des pistes du support d'enregistrement optique pour être à son tour modulé spatialement ; et une pluralité de systèmes optiques pour superposer chaque faisceau objet à un faisceau de référence au niveau d'une plage de stockage de données appartenant à une piste différente dudit support de stockage holographique, pour y enregistrer la figure d'interférence qui en résulte ; de manière à effectuer ledit enregistrement de données en parallèle sur plusieurs pistes du support de stockage holographique.
- Les faisceaux objet et de référence peuvent être incidents sur ledit support de stockage holographique d'un même côté de ce dernier, ou bien de deux côtés opposés.
- Le support de stockage holographique et le support d'enregistrement optique portant lesdits éléments optiques diffractifs peuvent présenter des coefficients de dilatation thermique sensiblement identiques.
- Ledit support d'enregistrement optique portant lesdits éléments optiques diffractifs peut être réalisé en matière plastique par un procédé de moulage.

Un autre objet de l'invention est un dispositif de lecture de données inscrites sur un support de stockage holographique, comportant : un moyen de génération d'un faisceau de lumière cohérente, dit faisceau de lecture ; un moyen pour moduler spatialement, d'une manière prédéterminée, ledit faisceau de lecture ; et un système optique pour diriger le faisceau de lecture modulé spatialement sur une plage de stockage de données dudit support de stockage holographique, et pour collecter la lumière diffractée par ladite plage ; ledit moyen pour moduler spatialement ledit faisceau de lecture étant adapté pour lire une pluralité de blocs de données enregistrés sur ladite plage de stockage de données, chaque bloc étant lu à l'aide d'une configuration de modulation distincte du faisceau de lecture, de manière à réaliser un démultiplexage desdits blocs de données ; caractérisé en ce que ledit moyen pour moduler spatialement ledit faisceau de lecture comprend un support d'enregistrement optique sur lequel est réalisée une succession d'éléments optiques diffractifs, introduisant chacun une dite configuration de modulation distincte, ainsi qu'un premier actionneur pour déplacer ledit support d'enregistrement optique afin d'amener de manière séquentielle lesdits éléments optiques diffractifs sur la trajectoire du faisceau de lecture.

Selon des modes de réalisation particuliers de l'invention :

- Chacun des éléments optiques diffractifs introduisant une modulation du faisceau de lecture peut être un réseau de diffraction pour dévier ledit faisceau suivant un angle différent, de manière à réaliser un démultiplexage de blocs de données multiplexés en angle sur ladite plage de stockage.

- De manière alternative, chacun des éléments optiques diffractifs introduisant une modulation du faisceau de lecture peut être adapté pour introduire une modulation de l'amplitude complexe dudit faisceau sans modifier sensiblement sa direction de propagation, les configurations de modulation introduites par lesdits éléments optiques diffractifs étant sensiblement orthogonales entre elles de manière à réaliser un démultiplexage de blocs de données multiplexés en phase et/ou d'amplitude sur ladite plage de stockage.

- Ledit support d'enregistrement optique peut être un disque pouvant être actionné en rotation autour d'un axe, lesdits éléments optiques diffractifs étant agencés circulairement autour dudit axe.

- Les configurations de modulation introduites par lesdits éléments optiques diffractifs peuvent être monodimensionnelles dans la direction de rotation du support d'enregistrement optique en forme de disque.

- En variante, chacun desdits éléments optiques diffractifs peut être décomposé en une pluralité de sections successives dont l'orientation varie pour compenser l'effet de la rotation dudit support d'enregistrement optique en forme de disque.

- Ledit faisceau de lecture peut être est un faisceau impulsionnel synchronisé avec le déplacement dudit support d'enregistrement optique de manière à être éteint lors des transitions desdits éléments optiques diffractifs.

- Ledit support de stockage holographique peut comporter une pluralité des plages de stockage de données, le dispositif comportant également un deuxième actionneur, synchronisé avec lesdits moyens pour moduler spatialement le faisceau de lecture, pour amener de manière séquentielle lesdites plages sur le trajet dudit faisceau.

- Ledit support de stockage holographique peut être un disque pouvant être actionné en rotation autour d'un axe et en translation perpendiculairement audit axe, lesdites plages de stockage de données étant agencées en une pluralité de pistes concentriques circulaires ou en spirale dont le centre coïncide avec ledit axe.

- Ledit support d'enregistrement optique peut être un disque pouvant être actionné en rotation autour d'un axe et comportant une pluralité de pistes circulaires concentriques, dont le centre coïncide avec ledit axe, chacune desdites pistes contenant une succession d'éléments optiques diffractifs, le dispositif comportant également : un moyen pour générer une pluralité de faisceaux de lecture, chacun d'entre eux étant dirigé de manière à traverser l'une des pistes du support d'enregistrement optique pour être modulé spatialement ; et une pluralité de systèmes optiques, pour diriger Chaque faisceau de lecture modulé spatialement sur une plage de stockage de données appartenant à une piste différente dudit support de stockage holographique, et pour collecter la lumière diffractée par chaque plage, de manière à effectuer ladite lecture de données en parallèle sur plusieurs pistes du support de stockage holographique.

- Ledit faisceau de lecture peut être diffracté vers l'avant par ladite ou chaque plage de stockage de données. Alternativement, le faisceau de lecture peut être diffracté vers l'arrière par ladite ou chaque plage de stockage de données.

- Le support de stockage holographique et le support d'enregistrement optique portant lesdits éléments optiques diffractifs peuvent présenter des coefficients de dilatation thermique sensiblement identiques.

- Ledit support d'enregistrement optique portant lesdits éléments optiques diffractifs peut être réalisé en matière plastique par un procédé de moulage.

- Le dispositif peut comporter également au moins un détecteur matriciel pour détecter la lumière dudit ou de chaque faisceau de lecture diffracté par ladite ou par chaque plage de stockage de données.

- Ledit support d'enregistrement optique en forme de disque peut comporter des structurations pour synchroniser le détecteur matriciel avec son mouvement de rotation.

Encore un autre objet de l'invention est un dispositif de réplication d'un premier support de stockage holographique sur un deuxième support holographique, ledit dispositif de réplication comportant un dispositif d'enregistrement de données sur ledit deuxième support holographique selon l'invention, dans lequel les moyens de génération et de modulation spatiale du ou des faisceaux objet sont constitués par un dispositif de lecture dudit premier support de stockage holographique, également selon l'invention.

D'autres caractéristiques, détails et avantages de l'invention ressortiront à la lecture de la description faite en référence aux dessins annexés donnés à titre d'exemple et qui représentent, respectivement :

Les figure 1a et 1b : ie principe de l'enregistrement et de la lecture d'un hologramme.
La figure 2 : un principe de l'art antérieur pour le multiplexage angulaire des hologrammes.
La figure 3 : un principe de l'art antérieur pour le multiplexage en phase des hologrammes.
La figure 4 : un principe de l'invention pour le multiplexage angulaire des hologrammes.

La figure 5 : un principe de l'invention pour le multiplexage en phase des hologrammes.

Les figures 6a et 6b : des exemples de modes de réalisation d'un dispositif d'enregistrement de données sur un support de stockage holographique basé sur le multiplexage angulaire, en configuration d'enregistrement co-propagative et contra-propagative respectivement.

Les figures 7a et 7b : des exemples de modes de réalisation d'un dispositif de lecture de données inscrites sur un support de stockage holographique basé sur le multiplexage angulaire, en configuration de lecture des données co-propagative et contra-propagative respectivement.

Les figures 8a et 8b : des exemples de modes de réalisation d'un dispositif de réplication d'un média holographique obtenu par multiplexage angulaire suivant l'invention : données écrites en modalité co-propagative et lues en modalité co-propagative en figure 8a ; données écrites en modalité contra-propagative et lues en modalité co-propagative en figure 8b.

La figure 9 : un exemple de modes de réalisation d'un dispositif d'enregistrement de données sur un support de stockage holographique basé sur le multiplexage en phase.

La figure 10 : un exemple de mode de réalisation d'un dispositif de lecture de données inscrites sur un support de stockage holographique basé sur le multiplexage en phase.

Les figures 11a et 11b : des exemples de mode de réalisation d'un dispositif de réplication d'un média holographique obtenu par d'un dispositif de réplication d'un média holographique obtenu par multiplexage en phase suivant l'invention ; en figure 11a, réplication simple ; en figure 11b, réplication parallèle

La figure 12 : un exemple de montage de synchronisation de l'écriture/lecture/réplication de disques holographiques suivant l'invention.

La figure 13 : un mode de réalisation d'un disque de codage du faisceau de référence/lecture suivant l'invention.

Les figures 14a - 14e : des étapes d'un procédé de fabrication de disques de codage du faisceau de référence suivant la méthode de matriçage (mastering) et de réplication par moulage.

La figure 15 : un exemple d'une série d'éléments optiques diffractifs de type réseau sur le disque de codage pour le multiplexage angulaire.

La figure 16: un exemple d'une succession d'éléments optiques diffractifs sur le disque de codage pour le multiplexage en phase.

La figure 16b : un exemple d'un élément optique diffractif sur le disque de codage pour le multiplexage en phase, selon une variante de l'invention.

Les figures 17a - 17c : des étapes de fabrication d'un disque de codage par matriçage (mastering) et réplication par modification de la rugosité de surface. Et

la figure 18 : un exemple d'un élément optique segmenté en sections d'orientation variable.

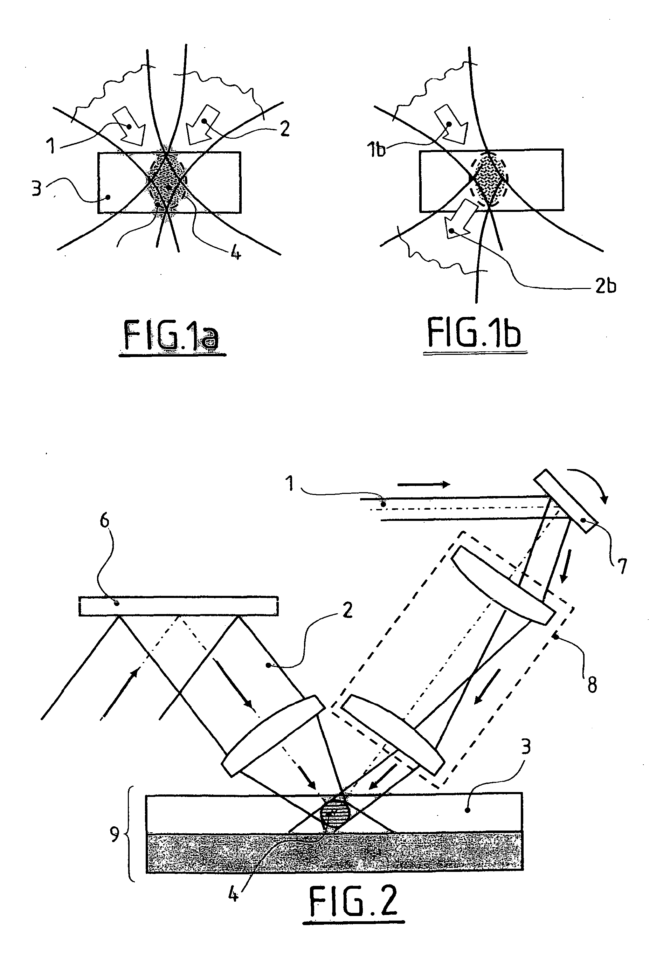

Les figures 1a et 1b illustrent le principe général de l'écriture et de la lecture d'un hologramme, qui a déjà été décrit plus haut. Deux faisceaux sont superposés au sein d'un matériau photosensible 3. Le premier, noté 1, est appelé faisceau de référence ; le second, noté 2, faisceau objet. Chaque faisceau est caractérisé par un champ se propageant dans l'espace. Au niveau du recouvrement des faisceaux un système complexe d'interférences est créé. Ces interférences sont enregistrées dans un volume du média holographique 3 pour former l'hologramme 4.

Pour la lecture, cet hologramme est éclairé par un faisceau de lecture de référence 1b dont le champ propagatif est identique à celui d'enregistrement 1 (ou à son complexe conjugué, mais ce deuxième cas sera ignoré par la suite). Dans ce cas l'hologramme diffracte le faisceau référence de manière à former un nouveau faisceau 2b dont le champ propagatif est, en première approximation, identique à celui du faisceau objet 2.

La figure 2 décrit le principe utilisé dans l'art antérieur pour effectuer le multiplexage en angle du faisceau de référence, principe qui a été, lui aussi, discuté plus haut. Un faisceau laser est séparé en deux sous faisceaux 1 et 2. Le faisceau objet 2 est incident sur un modulateur spatial de lumière 6 (Spatial Light Modulator, SLM) qui encode son front d'onde suivant les données à stocker. Ce SLM peut être constitué d'une matrice de micro-miroirs du type de celle commercialisée par Texas Instruments (technologie DLP). Chaque micro-miroir réfléchit ou non une partie du front d'onde permettant d'y coder les valeurs 0 ou 1 des données à stocker. Ce faisceau objet est généralement focalisé à l'aide d'une optique dans le média holographique 9 notamment en configuration f - f (le SLM est au point focal objet de l'optique) afin de retrouver dans le média la transformée de Fourier du front d'onde.

Le faisceau 1 constitue la référence. Un miroir mobile 7 permet généralement de modifier l'angle du faisceau 1 afin d'assurer le multiplexage. Dans ce cas une optique 8 est utilisée afin de conserver le recouvrement des faisceaux 1 et 2 au niveau du média holographique 9 quel que soit l'angle imposé au faisceau 1.

D'autres solutions existent pour effectuer le changement d'angle, on citera par exemple l'utilisation de modulateurs acousto-optiques ou le déplacement d'une lentille.

A titre d'exemple, le document US6700686 précité décrit plus en détail un mode de réalisation suivant le concept du multiplexage angulaire.

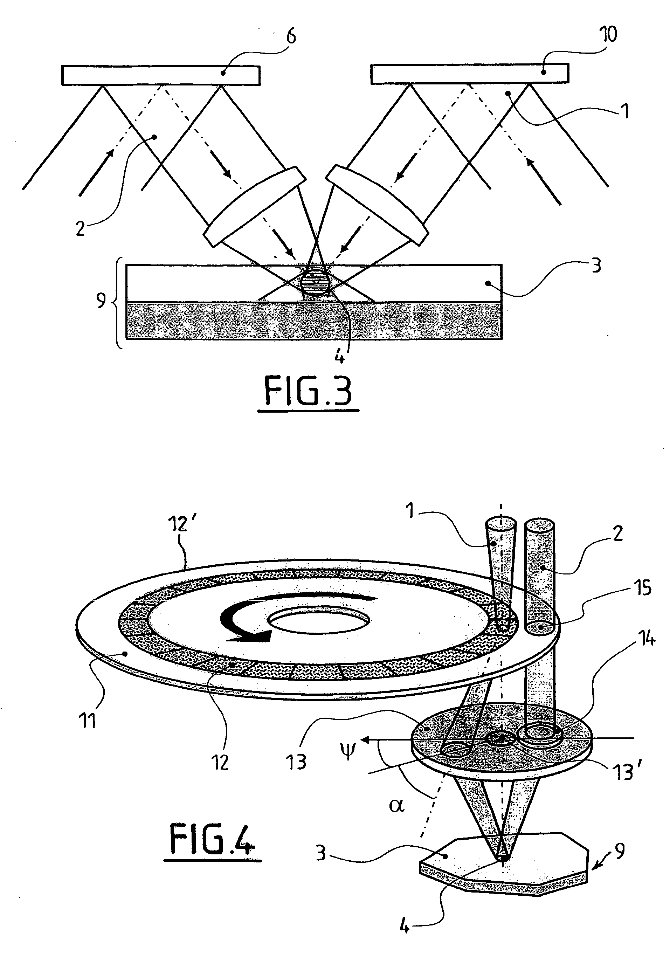

La figure 3 décrit le principe généralement utilisé dans l'art antérieur pour effectuer le codage en phase du faisceau de référence 1. Comme dans le cas précédent, un faisceau laser est séparé en deux sous-faisceaux. Le faisceau objet est dirigé vers un SLM 6 afin de coder le front d'onde.

De manière similaire, le faisceau de référence 1 est également dirigé vers un deuxième SLM 10 qui peut être identique ou non au SLM 6. L'objectif du modulateur 10 est de modifier les propriétés du front d'onde de référence (l'amplitude et/ou la phase ; en général, l'amplitude complexe) de façon séquentielle et répétable. Deux optiques de focalisation qui peuvent être réunies en une seule optique assurent la focalisation des faisceaux au niveau de la zone de recouvrement.

Le SLM 10 peut être du type matrice de micro-miroirs ou peut être une matrice de cellules à cristaux liquides.

Eventuellement, le codage du faisceau de référence et celui du faisceau objet peuvent être obtenus à partir du même SLM comme cela est démontré par Z. Karpati et al. dans leur publication « Comparison of coaxial holographic storage arrangements from the M number consumption point of view », Jpn. J. Appl Phys 46 (2007) 3845-3849.

Dans les deux cas la zone de superposition des faisceaux est positionnée dans une couche de matériau photosensible 3 déposée sur le média de stockage 9. Ce media est mis en rotation afin de séquencer les zones d'écriture des hologrammes.

La figure 4 donne le principe du codage angulaire selon l'invention. Dans le cas de la figure, les deux faisceaux 1 et 2 sont placés côte à côte pour privilégier une insolation colinéaire qui semble être actuellement la solution de choix pour l'enregistrement holographique.

Le faisceau de référence traverse le disque 11 au niveau d'une zone structurée 12. Cette zone contient un réseau de diffraction et a pour effet de dévier le faisceau incident suivant deux angles $\alpha$ et $\psi$.

Le faisceau objet 2, dont le front d'onde a auparavant été codé avec les données à enregistrer, traverse le disque en une zone 12' exempte de structuration et ne subit donc pas de déviation.

Une optique 13 permet de collecter les faisceaux 1 et 2 afin de les faire converger vers la zone de recouvrement dans ie média photosensible 3, au niveau de l'hologramme 4. Pour garantir ce bon recouvrement différentes techniques peuvent exister. La figure représente celle qui utilise un double montage 2f - 2f et f - f. La zone structurée 12 se situe à une distance égale à deux distances focales 2f de l'optique 13, sur l'axe optique. Tous les faisceaux issus de cette zone convergent donc en l'image de la zone structurée, à une distance 2f de l'optique 13, sur l'axe optique.

Le faisceau objet étant parallèle à l'axe optique du système, si on veut le focaliser au niveau de l'hologramme 3 il faut utiliser une lentille 14 ayant le même axe optique que l'optique 13 mais une focale double. Cette lentille peut être fabriquée en insert de la précédente, comme montré sur la figure, par des techniques de moulage.

La configuration à transformée de Fourier étant généralement privilégiée, le SLM ayant codé le front d'onde objet est relayé par une optique non représentée sur le schéma de façon à ce que son image se situe dans la zone 15, à la distance focale de la lentille 14.

Lorsque le disque entre en rotation, le faisceau 1 subit une séquence de déflections suivant des angles $\alpha$ et $\psi$ différents, mais le recouvrement des faisceaux objet et référence reste au niveau de l'hologramme 4.

Suivant un mode privilégié d'utilisation, l'optique 13 peut également comporter une zone opaque 13' permettant de filtrer l'ordre 0 de la diffraction du faisceau référence.

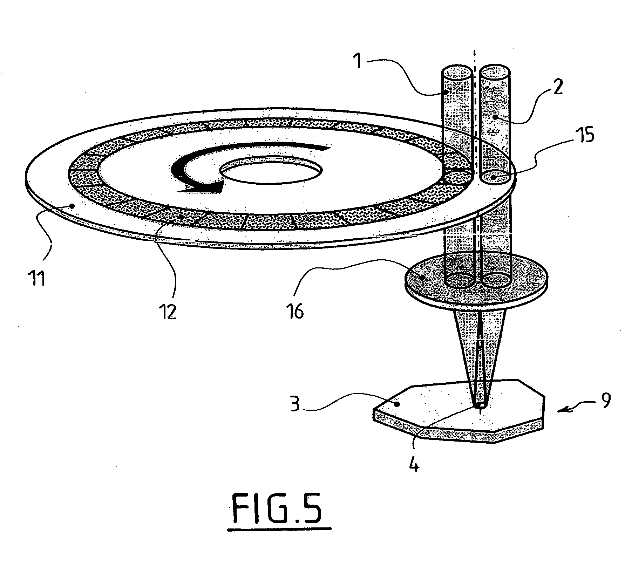

La figure 5 donne le principe du codage en phase selon l'invention.

Le faisceau 1 traverse une zone structurée du disque, sur laquelle sont réalisés des éléments optiques diffractifs 12, alors que le faisceau 2 traverse une zone libre 12' du disque. Ce cas est plus simple que le précédent car les éléments optiques 12 introduisent une modulation de phase qui ne modifie pas sensiblement la direction de propagation du faisceau de référence 1 : les deux faisceaux 1 et 2 restent donc parallèles. L'optique 16 de focalisation a donc une focale unique, égale à la distance entre l'optique et le média photosensible. La configuration à transformée de Fourier étant généralement privilégiée, le disque optique se trouve également à distance focale de l'optique 16 et, tout comme dans le cas précédent, le SLM de codage objet est imagé par une optique relais non représentée sur le disque. De ce fait, l'hologramme enregistre les interférences entre les deux transformées de Fourier du SLM et de la zone structurée 12.

La modulation spatiale du faisceau de référence peut également se faire en amplitude. Plus généralement, l'amplitude et la phase peuvent être toutes deux modulées : on parle alors de modulation de l'amplitude complexe.

Suivant un mode de réalisation privilégié, le disque de codage 11 et le média holographique 9 sont fabriqués avec des matériaux et des géométries semblables (notamment l'épaisseur et le matériau du substrat). De ce fait, lors de phénomènes de dilatation thermique, les variations de codage du faisceau de référence suivent les variations subies par l'hologramme. A l'évidence, cela n'est pas possible lorsque la modulation du faisceau de référence est réalisée par un SLM, comme dans l'art antérieur.

Un exemple simple revient à considérer un codage angulaire généré par un réseau de diffraction de pas $\lambda_{réseau}$. L'angle de diffraction au premier ordre du faisceau de référence 1 est donné de manière simple par l'expression de diffraction des réseaux suivante (incidence normale sur le réseau) :

$$\alpha = \arcsin\left(\frac{\lambda}{\Lambda_{réseau}}\right)$$

On suppose que le faisceau objet 2 est vierge de donnée. L'hologramme consiste donc en une figure d'interférence dont le pas dépend de l'angle entre les deux faisceaux 1 et 2. Si l'angle d'incidence du faisceau objet sur le média est nul, le pas de la figure d'interférence s'exprime par l'équation :

$$\Lambda_{holo} = \frac{\lambda}{2\sin\left(\frac{\alpha}{2}\right)}$$

Si un changement de température se traduit par une dilatation d'un facteur ρ sur le pas des interférences, l'angle réciproque α' nécessaire à la reconstruction de l'hologramme devient :

$$\alpha' = 2\arcsin\left(\frac{\lambda}{\rho\,\Lambda_{holo}\times 2}\right)$$

Le réseau de diffraction du codage du faisceau de référence a lui aussi subi une dilatation d'un facteur p, l'angle diffracté devient α" :

$$\alpha'' = \arcsin\left(\frac{\lambda}{\rho\,\Lambda_{réseau}}\right)$$

Pour des faibles angles on voit donc que l'effet de dilatation sur le réseau compense la variation angulaire induite par la dilatation de l'hologramme : α' = α".

Les figures 4 et 5 présentent le principe de l'écriture de l'hologramme, pour la lecture il suffit de considérer ces figures sans le faisceau objet qui est reconstruit par le faisceau de lecture en dessous du média holographique.

Les figures 4 et 5 donnent le principe d'une écriture avec des faisceaux colinéaires co-propagatif, c'est à dire se propageant dans le même sens et étant incident sur le support de stockage holographique 9 d'un même côté de celui-ci. Le principe de l'invention s'applique également aux autres configurations d'écriture/lecture telle que la configuration contra-propagative, dans laquelle les faisceaux 1 et 2 se propagent dans des sens opposés et sont incidents sur le support de stockage holographique 9 de deux côtés opposés de celui-ci.

Que le multiplexage des données se fasse en phase ou en angle, et que la géométrie de propagation soit co- ou contra-propagative, il est opportun que le faisceau d'inscription des hologrammes soit impulsionnel, et plus particulièrement que le laser soit éteint durant la transition entre deux éléments optiques diffractifs 12. Cela permet d'éviter le recouvrement entre deux motifs de référence pour un codage objet donné. Lorsque le faisceau utile aborde la frontière séparant deux zones de codage, le faisceau est coupé et le codage objet rafraîchi. Quand le faisceau utile a entièrement pénétré dans la zone suivante, le laser est allumé.

La durée d'allumage du laser dépend principalement de la sensibilité du matériau holographique. Plus le matériau est sensible, plus l'impulsion pourra être courte. Plus l'impulsion est courte plus le disque holographique pourra tourner vite.

On donne à la suite des exemples de réalisation qui ne limitent en rien la généralité de l'invention.

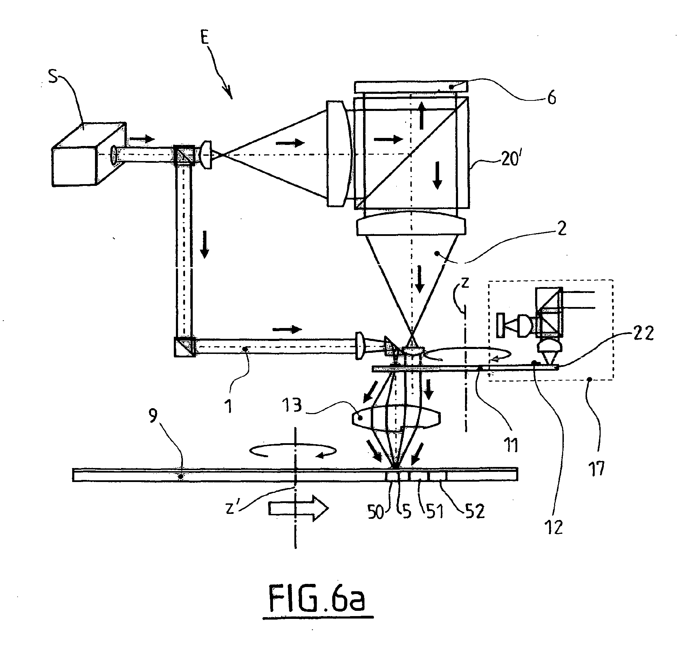

La figure 6a représente un dispositif d'enregistrement E de données sur un support de stockage holographique 9 en forme de disque (« disque holographique »), fonctionnant selon la modalité co-propagative. Dans ce dispositif, le faisceau laser incident, engendré par une source S telle qu'une diode laser, est séparé en deux sous-faisceaux par un cube séparateur. Le faisceau objet 2 est mis en forme par un télescope pour adapter sa taille à celle du SLM 6. Une fois réfléchi par le modulateur spatial, le faisceau objet 2 est à nouveau mis en forme par un objectif qui conjugue le SLM au niveau du disque de codage 11.

Le faisceau de référence 1 est lui aussi dirigé vers le disque holographique 9, et une optique permet de faire converger le faisceau au niveau du disque et d'adapter sa taille au niveau du média holographique 9. Après passage par le disque de codage, le faisceau référence est dévié suivant au moins une des deux directions angulaires α et ψ (voir figure 4).

L'optique de collection 13 permet de faire converger les faisceaux 1 et 2 dans la zone de recouvrement à l'image de ce que montre la figure 4.

Le disque de codage 11 est mis en rotation rapide autour d'un axe Z par un actionneur non représenté, de manière à faire défiler sur le trajet du faisceau de référence 1 les éléments optiques diffractifs 12, qui sont agencés le long d'une piste circulaire dont le centre coïncide avec ledit axe Z.

Une structuration 22 présente sur le disque 11 permet à un système de détection 17 de synchroniser l'écriture des données dans le disque holographique 9. Ce système de détection est décrit à la suite. On omettra de le représenter sur les figures suivantes par soucis de simplicité.

Le disque holographique 9 est mis en rotation lente autour d'un axe Z' par un premier actionneur (non représenté) pour permettre le multiplexage des hologrammes au sein d'une même plage de stockage de données 5. Le disque 9 tourne ainsi d'une valeur angulaire correspondant au pas de ces volumes pour chaque séquence de codage sur le disque 11. Dans un exemple privilégié, le disque 9 tourne de cette valeur angulaire élémentaire à chaque rotation complète du disque 11.

Le disque holographique 9 est également animé d'un mouvement de translation dans une direction perpendiculaire à l'axe de rotation Z', par un deuxième actionneur (également non représenté) de manière à ce que l'insolation des plages d'enregistrement de données 5 couvre toute la surface disponible du disque. Plus précisément, les plages d'enregistrement 5 sont agencées en une pluralité de pistes 50, 51, 52 concentriques, circulaires ou en spirale, dont le centre coïncide avec ledit axe.

On remarquera que le support d'enregistrement holographique 9 ne doit pas nécessairement avoir une forme de disque, mais qu'il s'agit là seulement d'un mode de réalisation préféré.

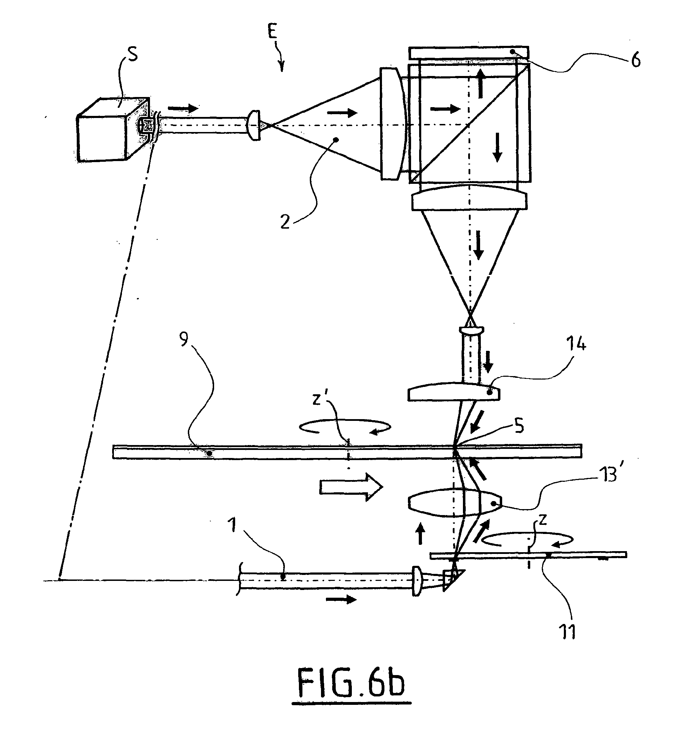

La figure 6b présente un montage très similaire au précédent dans le cas d'une insolation contra-propagative, dans lequel les faisceaux 1 et 2 sont incidents sur le disque holographique 9 de deux côtés opposés de ce dernier. Contrairement au cas précédent, ces deux faisceaux sont focalisés sur les plages de stockage de données du disque 9 par deux optiques séparées 13', 14.

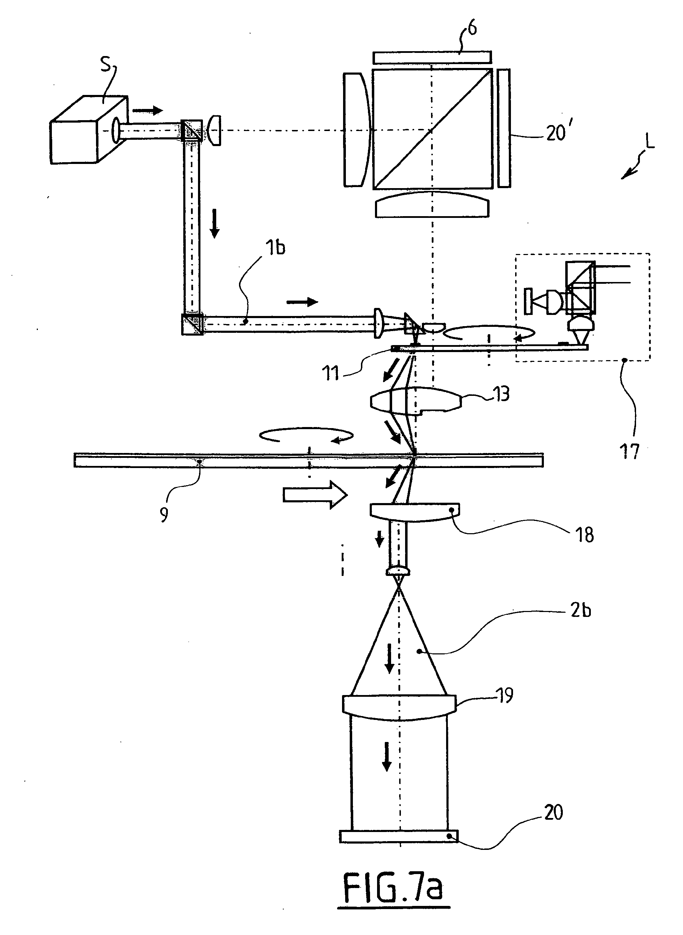

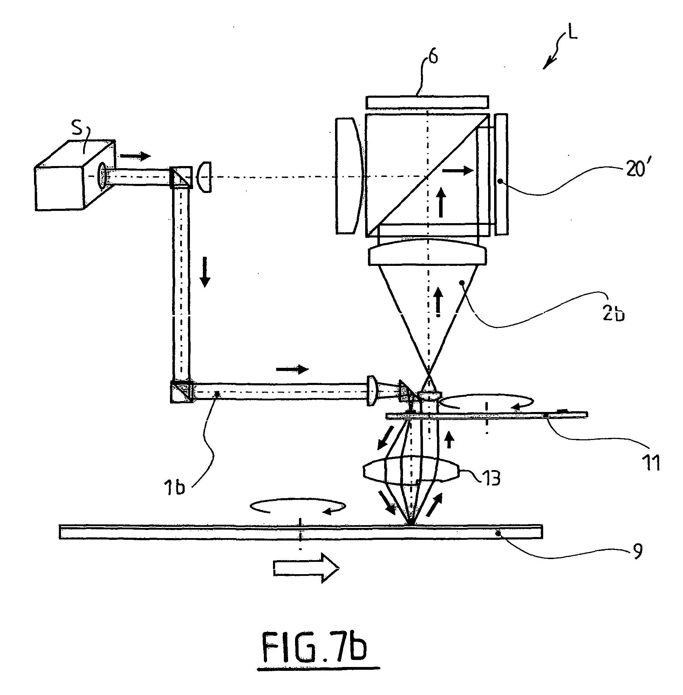

Les figures 7a et 7b représentent des dispositifs L de lecture de données correspondant aux dispositifs d'enregistrement, ou écriture, des figures 6a et 6b, respectivement.

Sur la figure 7a, le faisceau de lecture 1b est codé en angle par le disque 11 comme expliqué précédemment. On est ici dans ie cas de l'écriture co-propagative, le faisceau objet reconstitué 2b se propage donc dans le même sens que le faisceau de lecture 1 b. Ce faisceau 2b est collecté par une optique 18, 19, puis mis en forme pour être conjugué sur un détecteur matriciel 20 qui effectue la lecture des données.

Un système de synchronisation 17 est à nouveau utilisé pour synchroniser le détecteur matriciel avec le codage de lecture.

La figure 7a montre que la tête de lecture comporte également un SLM 6, qui demeure inutilisé. En effet, de cette manière, une même tête optique peut servir aussi bien pour l'écriture que pour la lecture des données.

La figure 7b présente le cas de la lecture d'un hologramme écrit en contra-propagatif. Le faisceau objet reconstitué 2b se propage donc dans le sens inverse du faisceau de lecture 1b. Le montage de lecture est très similaire à celui de la figure 6a.

Un détecteur matriciel 20' permet de faire la détection des données. Le détecteur 20' est également présent en figure 7a : cette tête d'écriture/lecture permet donc la lecture d'hologrammes écrits à la fois en co-propagatif et en contra-propagatif.

L'invention apporte également une solution au problème de la réplication des supports de stockage de données holographiques.

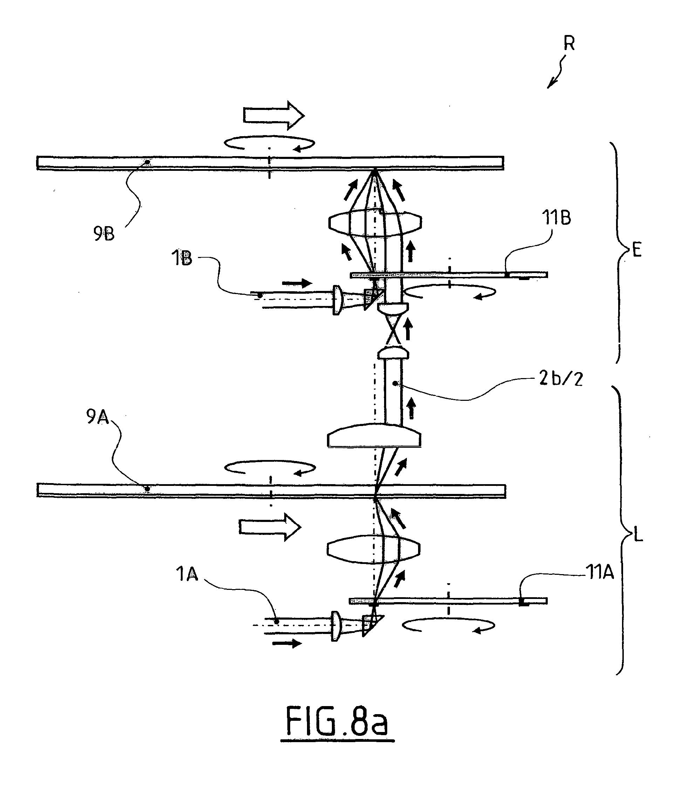

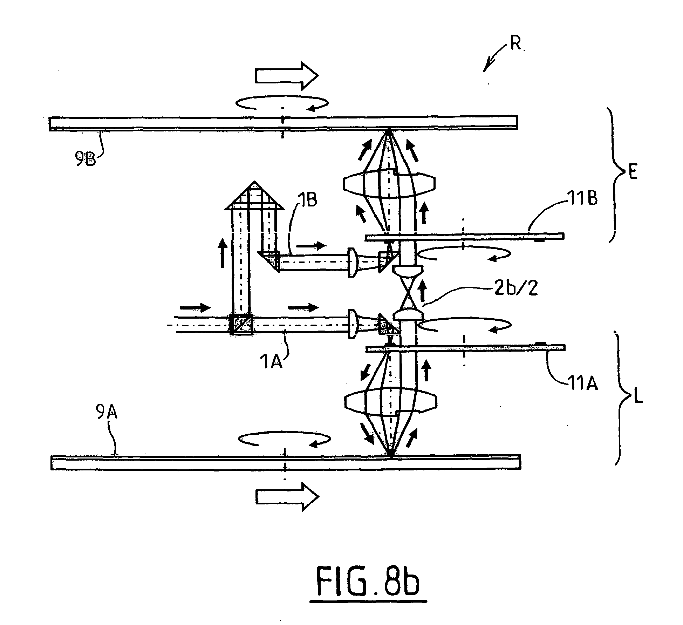

Comme cela a été expliqué plus haut, l'impossibilité d'utiliser la technique de réplication par pressage qui a tant contribué à succès des disques optiques conventionnels invite à considérer la réplication des disques holographiques par balayage, dans laquelle les hologrammes sont répliqués un par un. Comme le montrent les figures 8a et 8b, un système de réplication par balayage R est essentiellement constitué par un dispositif de lecture L qui lit le disque holographique d'origine 9A, et par un dispositif d'enregistrement E qui écrit les données lues sur un support vierge 9B. Avantageusement, les dispositifs de lecture et d'enregistrement L et E sont couplés optiquement : cela signifie que le lecteur L est dépourvu du détecteur matriciel 20, 20' et qu'il fournit à sa sortie un faisceau lumineux reconstitué 2b/2 qui sert de faisceau objet, déjà module par les données à inscrire, au dispositif d'écriture E. A son tour, ce dernier ne nécessite pas d'un SLM 6.

La rapidité de lecture et d'écriture des données est la clef principale pour rendre cette technologie viable. Il faut donc pouvoir balayer les hologrammes le plus vite possible. Or, le codage séquencé du faisceau de référence par un disque structuré 11 permet justement un balayage très rapide du disque holographique 9.

Si le disque de codage 11 présente des zones de structuration 12 de taille 630 $\mu$m disposée à une distance de 30 mm de l'axe de rotation Z, on dispose de 300 zones. Si la rotation du disque est de 5000 tours/minute (tr/min), la fréquence de codage potentielle est de 25 kHz. Un disque holographique ayant une taille de volume holographique de 600 $\mu$m contient environ 23 000 volumes disponibles. Si chaque volume contient 300 hologrammes, il faut donc, pour lire entièrement le disque, être capable de faire succéder 7.106 codages du faisceau de référence.

A la fréquence de codage permise par la rotation du disque on abouti à une durée de 4,6 minutes pour la réplication d'un disque. On est donc loin des quelques secondes du pressage, mais cette durée est plus avantageuse que dans le cas d'un codage du faisceau de référence par un SLM. La fréquence de codage des SLM classiques est en effet de quelques centaines de Hz et peut monter à quelque kHz dans le cas des produits DLP de Texas instrument. Dans le cas du codage par disque tournant la fréquence de codage va dépendre de la vitesse de rotation du disque, et peut donc être beaucoup plus élevée.

Pour réduire encore la durée de fabrication il peut également être intéressant d'insoler plusieurs hologrammes à la fois sur différents volumes au même moment. L'utilisation d'un disque tournant pour la réplication peut donc permettre une solution commercialement intéressante.

La figure 8a présente le cas de la réplication d'un disque holographique père 9A écrit en co-propagatif vers un disque répliqué 9B écrit en co-propagatif également. Pour cela deux disques de codage 11 A et 11B sont utilisés. Les deux disques doivent être synchronisés. Les deux faisceaux 1A et 1B représentés sur le schéma proviennent du même laser.

La figure 8b montre un montage de réplication d'un disque holographique père 9A écrit en contra-propagatif vers un disque holographique répliqué 9B écrit en co-propagatif. Ce montage a l'avantage d'être plus compact que le précédent on peut donc imaginer réunir les deux disques 11 A et 11B en une seule pièce afin de garantir mécaniquement la synchronisation de leur rotation.

D'autres configurations sont, bien entendu, envisageables.

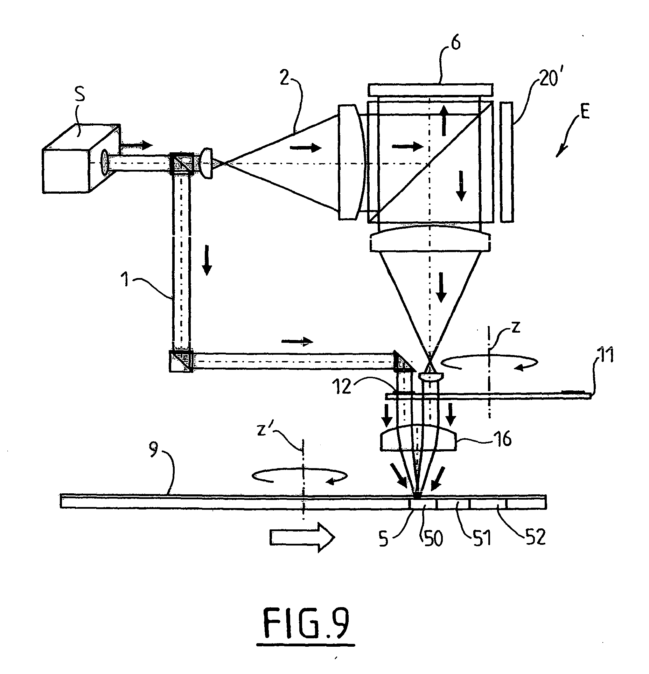

La figure 9 présente le cas de l'écriture de données sur un disque holographique codé en phase. Le montage est plus simple que dans le cas précédent, en particulier l'optique de collection des faisceaux référence et objet est unique. On ne décrit donc que le cas de l'écriture co-propagative.

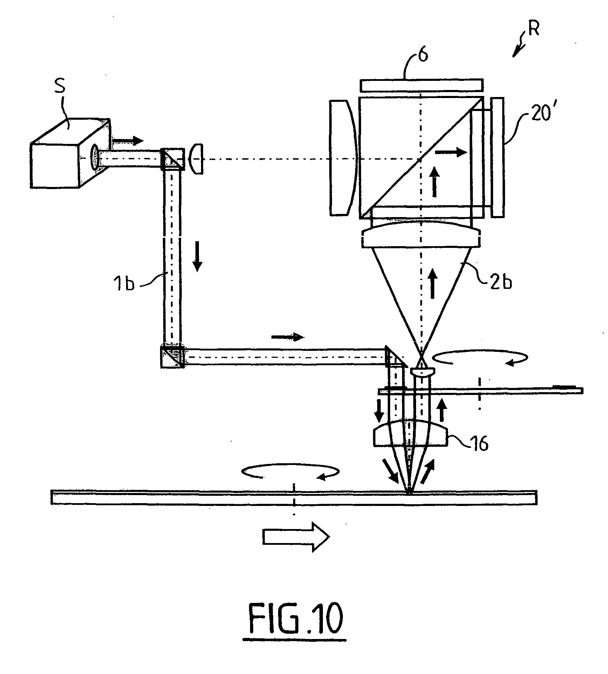

La figure 10 décrit la lecture d'un disque holographique écrit en modalité contra-propagative dans le cas du codage de phase. Le cas co-propagatif n'est pas décrit mais se déduit simplement des figures précédentes.

La comparaison des figures 9 et 10 montre encore une fois qu'une même tête optique peut être utilisée aussi bien pour l'écriture que pour la lecture des données.

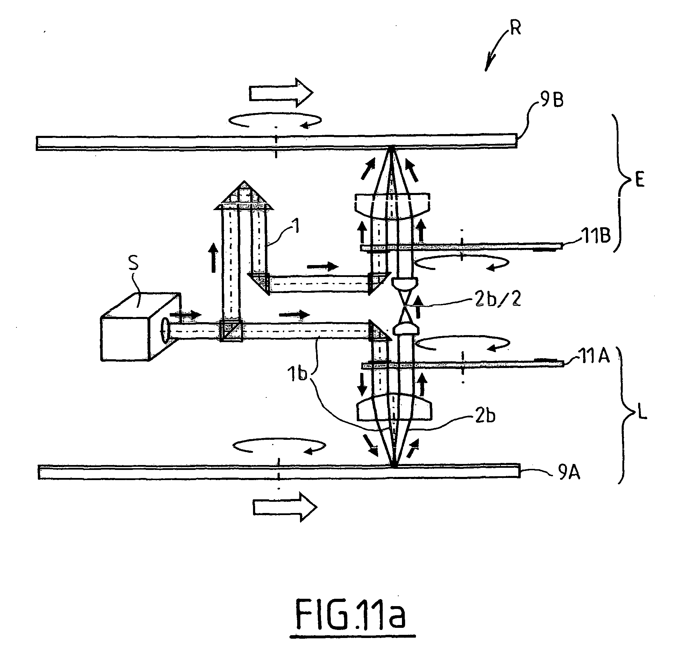

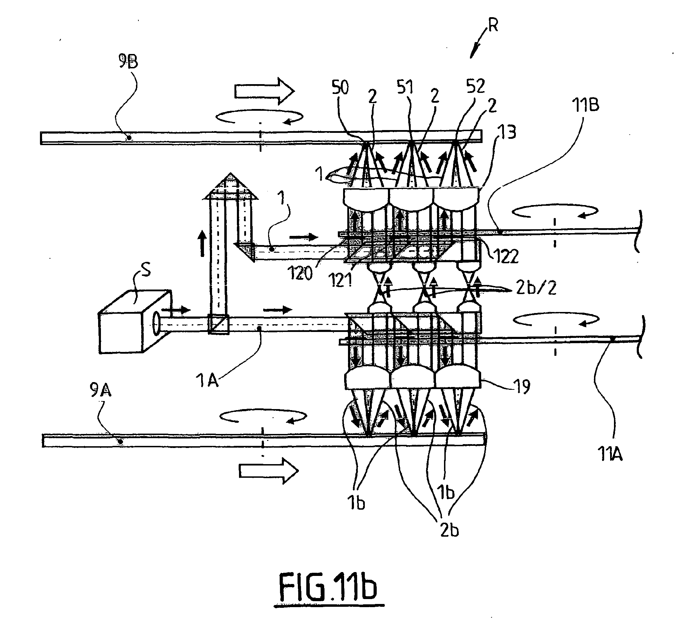

La figure 11 a décrit la réplication d'un disque père 9A écrit en modalité contra-propagative en un disque répliqué écrit en modalité co-propagative dans le cas du codage de phase.

La figure 11b reprend la figure précédente dans le cas d'une réplication multiple. Comme on le voit les deux faisceaux laser de référence sont divisés en plusieurs sous faisceaux qui adressent chacun une zone structurée des disques de codage 11A et 11B. Les disques holographiques sont translatés pendant l'écriture sur la distance séparant les zones structurées des disques de codage.

Les disques 11A et 11B sont ici plus complexes et plus volumineux que les disques 11 précédents : en particulier, ils doivent comporter une pluralité de pistes circulaires concentriques 120, 121, 122, dont le centre coïncide avec ledit axe, chacune desdites pistes contenant une même succession d'éléments optiques diffractifs 12. Cela ne pose cependant pas de problème car les équipements de réplication sont généralement lourds technologiquement. Leur performance ne porte en effet pas sur la compacité mais sur le débit. A titre d'exemple, avec 10 têtes de réplication parallèles, la durée de réplication de l'exemple précédent passe à environ 30 secondes.

En envisageant une distance raisonnable entre têtes d'écritures de 3 mm on peut compter 11 têtes d'écritures pour couvrir un déplacement total de 36 mm (largeur de la zone d'écriture sur un disque de rayon 60 mm).

Bien entendu, des systèmes à têtes multiples peuvent être utilisés à chaque fois qu'une écriture ou lecture particulièrement rapide des données est souhaitée, et pas seulement dans le cadre de la réplication.

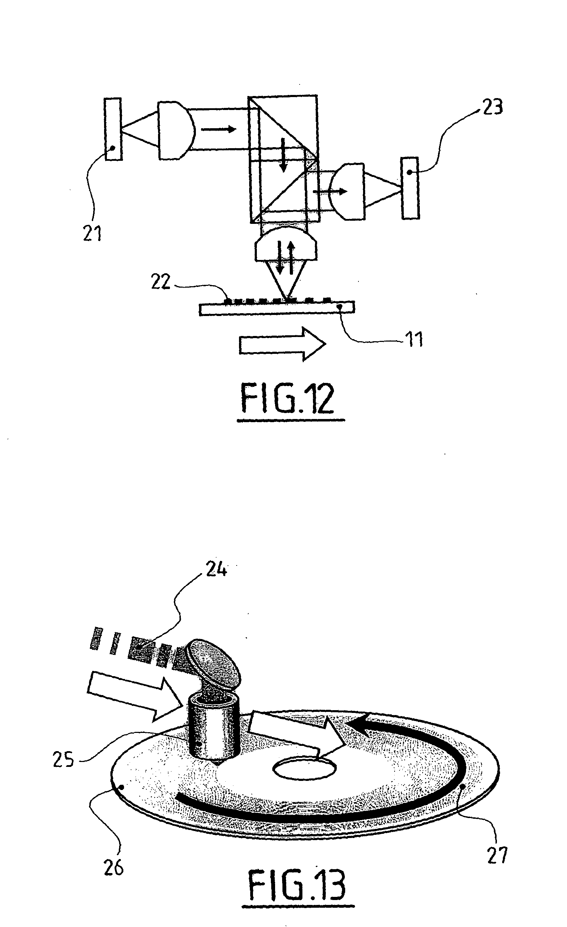

La figure 12 décrit le système de détection de marque sur le disque 11. Une source optique 21 est focalisée sur le disque 11 par une succession de cubes réfléchissants et de lentilles. Le disque comporte un marquage ou structuration 22 qui modifie la réflexion du faisceau au niveau de la surface du disque. Ce faisceau réfléchi est détecté par une photodiode 23. Le marquage 22 permet de repérer la coordonnée angulaire du disque lors de sa rotation (la flèche décrit le défilement du motif généré par la rotation du disque). A titre d'exemple, le marquage 22 est une alternance de bandes réfléchissantes et transparentes dont la période caractérise la position du spot sur le disque.

La figure 13 décrit un mode de réalisation privilégié du disque de codage 11 de l'invention. Il est basé sur un mouvement en spirale d'un spot laser d'insolation par rapport à un substrat.

Le substrat 26, amené à être transformé en disque de codage 11, tourne à la vitesse $V_{rot}$. Le faisceau 24 est mis en forme par la tête d'écriture 25 qui est animée d'un mouvement de translation à la vitesse $V_{trans}$. La direction de $V_{trans}$ est radiale, et perpendiculaire à l'axe de rotation de $V_{rot}$. Le spot laser insolant le substrat crée une zone modifiée dans la couche sensible 27, sous la forme de pistes séparées d'un pas $\Lambda$. La valeur du pas fixe la valeur de $V_{trans}$ pour une vitesse de rotation donnée :

$$V_{trans} = \frac{V_{rot}}{60} \times \Lambda$$

Avec $\Lambda$ en $\mu$m, $V_{trans}$ en $\mu$m/s et $V_{rot}$ en tr/min.

Dans le cas du mouvement en spirale, le spot se déplace au dessus du substrat avec une vitesse appelée vitesse linéaire $V_{lin}$ dont une expression approchée est donnée par :

$$V_{lin} = \frac{2\pi \times R \cdot 10^{-3}}{60} V_{rot}$$

Avec R, le rayon du spot par rapport au centre de rotation, en mm, et $V_{lin}$ en m/s.

Pour conserver une vitesse linéaire constante et donc une réponse du matériau 27 uniforme, la valeur de $V_{rot}$ doit changer en fonction de la position du spot. Il en va de même pour $V_{trans}$.

La vitesse de rotation doit en particulier augmenter lorsque le spot se rapproche du centre de rotation. Cette vitesse étant bornée par une valeur $V_{rotmax}$, la conservation du pas à une vitesse linéaire donnée impose un rayon $R_{min}$ minimum :

$$R_{min} = \frac{60}{2\pi} \frac{V_{lin}}{V_{rot.max} \cdot 10^{-3}}$$

Si on note $R_{max}$ le rayon maximum du spot on en déduit simplement la durée T1 d'insolation :

$$T1 = \frac{1}{V_{lin}} \times \frac{\pi\left(R_{max}^2 - R_{min}^2\right)}{\Lambda}$$

Le balayage du spot d'inscription se fait donc sur la base d'une spirale. C'est sur cette spirale que se base la grille d'échantillonnage des motifs de structuration du disque 11.

Sur une zone réduite du substrat 26, la spirale s'apparente à une succession de traits parallèles. On peut donc approximer une grille orthogonale de pas dr dans la direction radiale du disque et dθ dans la direction de la vitesse linéaire de déplacement du spot.

La résolution d'écriture est donnée par les plus petites valeurs possibles de dr et dθ.

La résolution linéaire dθ est fixée par la capacité du laser à être modulé à grande fréquence. Soit fl la fréquence de modulation maximale du laser.

$$d\theta = \frac{V_{lin}}{fl}$$

On trouve dans le commerce des sources laser d'insolation modulables à 500 MHz (voir le produit LDM A350 de la société Omicron Laserage Laserprodukte GmbH, www.lasersystem.de). Associé avec un mouvement de vitesse linéaire de 5 m/s on obtient une résolution dθ = 10 nm.

La résolution dans le domaine radial est donnée par la précision de la translation. Des précisions de l'ordre de quelques nanomètres sont actuellement disponibles, notamment grâce à l'usage de règles optiques de précision. La résolution radiale fixe le pas de la spirale et donc la durée d'insolation. Il faut donc généralement utiliser la plus haute valeur de dr possible afin de réduire cette durée.

Cette technologie de structuration offre donc une grande précision en comparaison aux technologies de SLM classiques. Structurer une zone de coté 600 μm sur une grille de 100 nm autorise un échantillonnage en 6000x6000 éléments. On est donc largement au dessus de la définition des SLM actuels qui sont de l'ordre de 1500x1500 pixels.

Une fois le matériau 27 insolé, le processus de fabrication du disque suit les étapes classiques de traitement en lithographie.

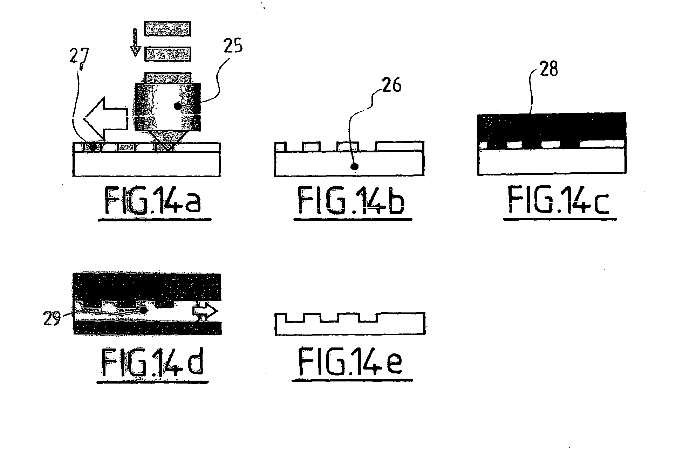

Dans le cas d'une résine, cette dernière est développée puis ont fait croître une couche épaisse de nickel 28 par galvanoplastie. Cette couche est ensuite retirée puis utilisée pour reproduire le disque d'origine par moulage par injection d'une matière plastique, par exemple du polycarbonate 29 (figure 14a à 14d). En figure 14e on montre le résultat de la réplication : un disque présentant une zone de structuration topographique.

Les disques de codage 11 peuvent ainsi être fabriqués en grande série par un procédé de moulage extrêmement rapide et économique. Il s'agit donc, à la différence des SLM, miroirs pivotants ou modulateur acoustic-optiques qu'ils remplacent, de dispositifs à bas cout, qui ont une influence négligeable sur le prix de revient des dispositifs de lecture et écriture qui les intègrent.

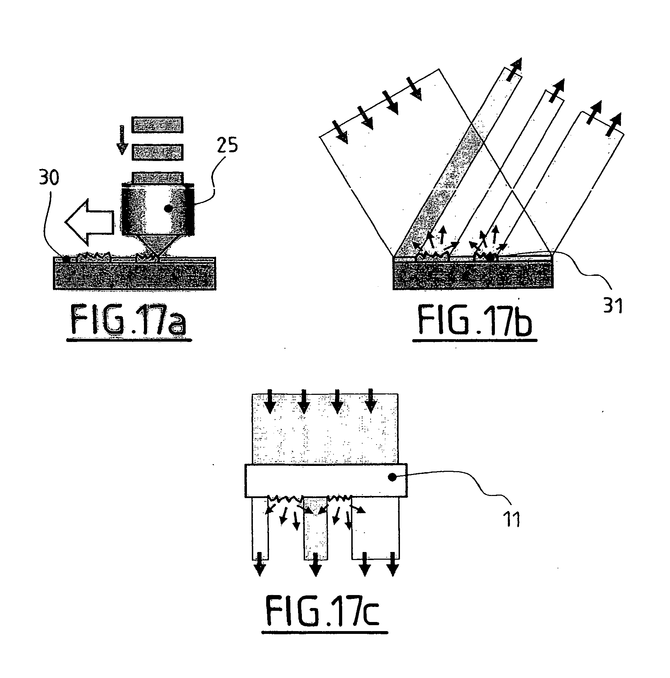

Les figures 17a et 17b présentent un autre mode de fabrication d'un disque de codage 11. On utilise une couche de matériau 30 qui a la propriété de se dégrader sous insolation laser. L'oxyde de platine, PtOx est un exemple de matériau qui sous l'effet thermique d'un faisceau laser focalisé se décompose en platine et en oxygène gazeux. Le dégazage provoque la détérioration de la surface. Le substrat peut ainsi être utilisé en masque d'amplitude pour la réalisation de réseaux de diffraction afin de mettre en oeuvre un multiplexage en angle des données. Les zones de surface détériorées 31 vont en effet diffracter le faisceau incident et produire un effet similaire à une zone absorbante. Il s'agit donc d'un codage d'amplitude (réelle) ; cependant, dans l'art il est usuel de parler, même en ce cas, de « codage de phase ».

La dégradation par laser de la surface engendre, sur la surface du disque original (« master ») un relief aléatoire ayant une amplitude de quelques dizaines de nanomètres. Un tel disque original peut ensuite être répliqué très rapidement et en grande série par le procédé de moulage des figures 14a- 14e.

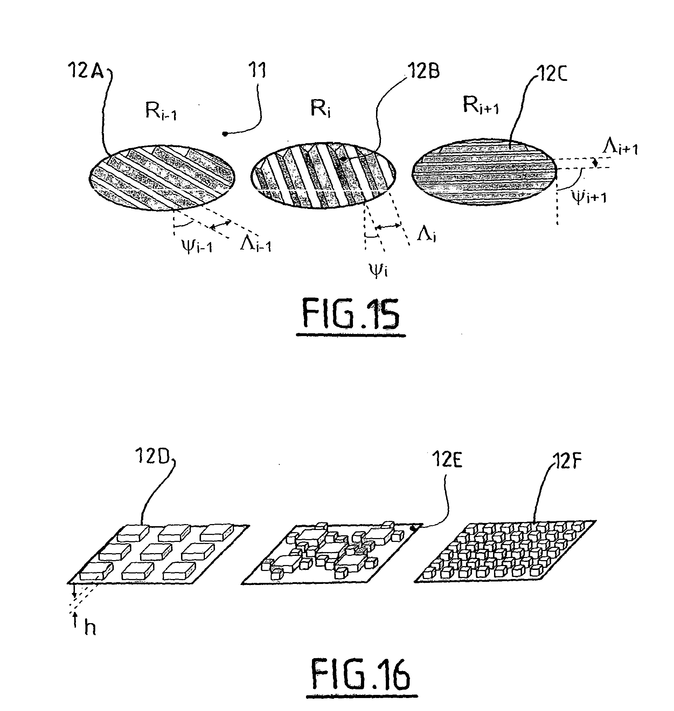

La figure 15 présente un exemple de succession d'éléments optiques diffractifs 12A, 12B, 12C de type réseau de diffraction, pour réaliser un multiplexage en angle. Les trois zones successives sont caractérisées notamment par un pas de réseau $\Lambda_i$ et par un angle $\psi_i$ par rapport à un axe de référence. On conçoit facilement qu'un faisceau laser balayé sur ces zones sera en sortie codé angulairement.

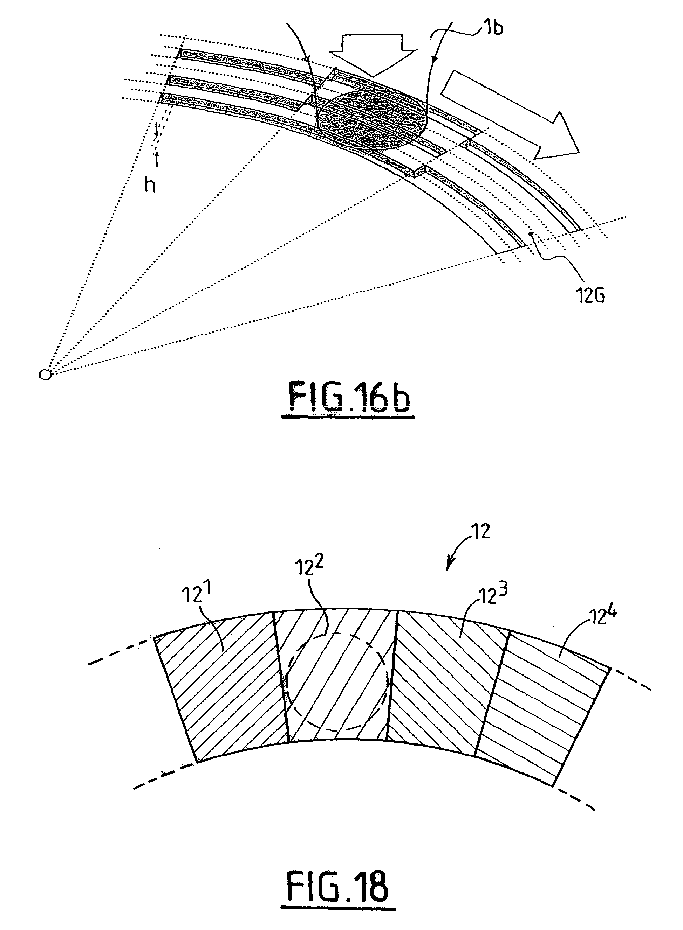

La figure 16 présente un exemple de succession d'éléments optiques diffractifs 12D, 12E, 12F de type codage de phase. La surface du disque 11 comporte des zones « topographiques » permettant de créer une cartographie de changements de phase. Le paramètre principal ici est la hauteur h du relief. Pour un déphasage optimum, le changement de phase doit être proche de π. Le déphasage est donné simplement par :

$$\delta\varphi = \frac{2\pi}{\lambda} \times n \times h = (2k+1)\pi$$

D'où :

$$h = (2k+1)\frac{\lambda}{2n}$$

L'épaisseur minimum pour un indice matériau de 1,5 à une longueur d'onde de 405 nm est de 135 nm. Ces valeurs sont réalisables avec les technologies de gravure et de réplication. Ces techniques offrent par ailleurs une bonne précision sur h.

Les technologies concurrentes de déphasage à base de micromiroirs ont généralement des grosses difficultés à produire des changements d'épaisseur aussi faibles et à garantir une bonne précision sur ces valeurs. La solution à disque de codage répliqué est donc particulièrement séduisante pour le multiplexage à codage de phase.

Si le matériau nécessite une insolation relativement longue, la rotation du disque peut poser problème, aussi bien dans le cas du codage en angle que dans celui du codage en phase et/ou amplitude (« amplitude complexe »). Dans ce cas le déplacement du spot dans un motif structuré en deux dimensions, tel que décrit en figure 16, durant la phase d'écriture doit être négligeable par rapport aux dimensions du motif. Sinon la figure d'interférence peut être brouillée. Le même problème se pose dans le cas d'un motif monodimensionnel, mais non limité à la direction radiale du disque (figure 15).

Pour éviter ce phénomène, il peut être avantageux d'avoir recours à un motif de codage monodimensionnel dans le sens radial du disque, dont un exemple est représenté sur la figure 16b. Ce codage est monodimensionnel, au lieu d'être bidimensionnel, mais cela ne limite pas sensiblement son potentiel de codage. En effet le nombre de codages restant limité pour l'application holographique (de l'ordre de quelques centaines), un codage monodimensionnel est largement suffisant.

Une structuration monodimensionnelle radiale peut également être utilisée pour le codage en angle. Dans ce cas, ies données sont multiplexées seulement selon l'angle voir la figure 4).

Comme le montre la figure 18, dans le cas du codage en angle, il est possible de multiplexer les données selon les deux angles $\alpha$ et $\psi$ tout en évitant le brouillage des hologrammes en décomposant chaque élément optique diffractif en sections $12^1$, $12^2$, $12^3$, $12^4$ agencées en succession dans la direction angulaire du disque et ayant environ la même taille du faisceau d'écriture ou lecture, l'orientation de la structuration de chaque section étant choisie de manière à compenser l'effet de la rotation du disque. A titre d'exemple, si on considère un éléments diffractif 12 ayant une dimension radiale de 630 $\mu$m, disposé à 30 cm du centre du disque et balayé par un faisceau de 30 $\mu$m de diamètre, la variation d'angle induite par la rotation du disque vaut 1,2°. Si cet élément est segmentée en 21 sections de 30 $\mu$m, la variation est seulement de 3'25" (ou 0,057°). Le faisceau de codage peut rester allumé en permanence, ou bien s'allumer seulement en correspondance du centre des sections, ce qui réduit encore plus le brouillage des hologrammes.

La décomposition en sections présentant des orientations variables pour compenser l'effet de la rotation du disque peut s'appliquer également au codage en phase (plus généralement, en amplitude complexe).

Si le matériau holographique est très sensible et peut accepter des impulsions d'écriture courtes alors un schéma de codage bidimensionnel 12G, tel que représenté sur la figure 16, est acceptable. Si on prend un exemple de disque tournant à 1000 tr/min, ayant 300 motifs de codage disposé à un rayon 30 mm. La durée de passage d'une zone à l'autre est de 200 $\mu$s. Une source modulable à 200 MHz fournit des impulsions de l'ordre de 5 ns. Durant cette impulsion le spot laser effectue un déplacement correspondant à 1/40 000ième de la distance entre deux plages de codage, soit un rapport de distance négligeable.

## Revendications

**1.** Dispositif d'enregistrement (E) de données sur un support de stockage holographique (9) comportant une pluralité des plages de stockage de données (5), ledit dispositif comportant :

- des moyens de génération (S) d'un premier faisceau de lumière (1), dit faisceau de référence, et d'un deuxième faisceau de lumière (2), dit faisceau objet, lesdits faisceaux étant mutuellement cohérents ;
- un moyen (6) pour moduler spatialement ledit faisceau objet, la modulation ainsi introduite étant représentative d'un bloc de données à enregistrer ;
- un moyen (11) pour moduler spatialement d'une manière prédéterminée ledit faisceau de référence (1), comprenant un support d'enregistrement optique (11) sur lequel est réalisée une succession d'éléments optiques diffractifs (12), introduisant chacun une configuration de modulation distincte, ainsi qu'un premier actionneur pour déplacer ledit support d'enregistrement optique afin d'amener de manière séquentielle lesdits éléments optiques diffractifs sur la trajectoire du faisceau de référence (1) ;
- un système optique (13, 13', 14, 16, 18) pour superposer les faisceaux objet et de référence, modulés spatialement, au niveau d'une plage de stockage de données (5) dudit support de stockage holographique (9), pour y enregistrer la figure d'interférence (4) qui en résulte ;
- un deuxième actionneur, synchronisé avec lesdits moyens (11) pour moduler spatialement les faisceaux objet et de référence, pour amener de manière séquentielle lesdites plages de stockage de données au niveau de la région où lesdits faisceaux se superposent et interfèrent ;

lesdits moyens (6, 11) pour moduler spatialement lesdits faisceaux objet et de référence étant synchronisés pour enregistrer une pluralité de blocs de données sur ladite plage de stockage de données (5), chaque bloc étant associé à une dite configuration de modulation distincte du faisceau de référence, de manière à réaliser un multiplexage desdits blocs de données ;
**caractérisé en ce que** ledit support de stockage holographique (9A) est un disque pouvant être actionné en rotation autour d'un axe (Z') et en translation perpendiculairement audit axe, lesdites plages de stockage de données (5) étant agencées en une pluralité de pistes (50, 51, 52) concentriques circulaires ou en spirale dont le centre coïncide avec ledit axe.

2. Dispositif selon la revendication 1, dans lequel ledit support d'enregistrement optique (11A,) est un disque pouvant être actionné en rotation autour d'un axe (Z) et comportant une pluralité de pistes circulaires concentriques (120, 121, 122), dont le centre coïncide avec ledit axe, chacune desdites pistes contenant une même succession d'éléments optiques diffractifs (12), le dispositif comportant également :

    - un moyen (L) pour générer et moduler spatialement une pluralité de faisceaux objet (2) ;
    - des moyens (S) pour générer un nombre égal de faisceaux de références (1), chacun desdits faisceaux de référence étant dirigé de manière à traverser l'une des pistes (120, 121, 122) du support d'enregistrement optique (11A, 11B) pour être à son tour modulé spatialement ; et
    - une pluralité de systèmes optiques (13) pour superposer chaque faisceau objet à un faisceau de référence au niveau d'une plage de stockage de données (5) appartenant à une piste différente (50, 51, 52) dudit support de stockage holographique (9A), pour y enregistrer la figure d'interférence (4) qui en résulte ;

de manière à effectuer ledit enregistrement de données en parallèle sur plusieurs pistes (50, 51, 52) du support de stockage holographique.

3. Dispositif selon l'une des revendications précédentes, dans lequel chacun des éléments optiques diffractifs (12) introduisant une modulation du faisceau de référence (1) est un réseau de diffraction (12A, 12B, 12C) pour dévier ledit faisceau (1) suivant un angle différent ($\alpha$, $\psi$), de manière à réaliser un multiplexage en angle desdits blocs de données sur ladite plage de stockage (5).

4. Dispositif selon l'une des revendications précédentes, dans lequel chacun des éléments optiques diffractifs (12D, 12E, 12F) introduisant une modulation du faisceau de référence (1) est adapté pour introduire une modulation de l'amplitude complexe dudit faisceau sans modifier sensiblement sa direction de propagation, les configurations de modulation introduites par lesdits éléments optiques diffractifs étant sensiblement orthogonales entre elles de manière à réaliser un multiplexage en phase et/ou en amplitude desdits blocs de données sur ladite plage de stockage.

5. Dispositif selon l'une des revendications précédentes, dans lequel ledit support d'enregistrement optique (11) est un disque pouvant être actionné en rotation autour d'un axe (Z), lesdits éléments optiques diffractifs (12) étant agencés circulairement autour dudit axe.

6. Dispositif selon la revendication 5, dans lequel les configurations de modulation introduites par lesdits éléments optiques diffractifs (12G) sont monodimensionnelles dans la direction de rotation du support d'enregistrement optique en forme de disque.

7. Dispositif selon la revendication 5, dans lequel chacun desdits éléments optiques diffractifs (12) est décomposé en une pluralité de sections successives ($12^1$, $12^2$, $12^3$, $12^4$) dont l'orientation varie pour compenser l'effet de la rotation dudit support d'enregistrement optique en forme de disque.

8. Dispositif selon l'une des revendications précédentes, dans lequel lesdits faisceaux objet et de référence sont incidents sur ledit support de stockage holographique d'un même côté de ce dernier.

9. Dispositif selon l'une des revendications 1 à 7, dans lequel lesdits faisceaux objet et de référence sont incidents sur ledit support de stockage holographique de deux côtés opposés de ce dernier.

10. Dispositif de lecture (L) de données inscrites sur un support de stockage holographique, comportant une pluralité de plages de stockage de données (5), ledit dispositif comportant :

    - un moyen (S) de génération d'un faisceau de lumière cohérente, dit faisceau de lecture (1b) ;

- un moyen (11) pour moduler spatialement, d'une manière prédéterminée, ledit faisceau de lecture, comprenant un support d'enregistrement optique (11) sur lequel est réalisée une succession d'éléments optiques diffractifs (12), introduisant chacun une configuration de modulation distincte, ainsi qu'un premier actionneur pour déplacer ledit support d'enregistrement optique afin d'amener de manière séquentielle lesdits éléments optiques diffractifs sur la trajectoire du faisceau de lecture ;

- un système optique (18, 19) pour diriger le faisceau de lecture modulé spatialement sur une plage de stockage de données (5) dudit support de stockage holographique (9), et pour collecter la lumière diffractée par ladite plage ; et

- un deuxième actionneur, synchronisé avec lesdits moyens (11) pour moduler spatialement le faisceau de lecture (1 b), pour amener de manière séquentielle lesdites plages sur le trajet dudit faisceau ;

ledit moyen (11) pour moduler spatialement ledit faisceau de lecture étant adapté pour lire une pluralité de blocs de données enregistrés sur ladite plage de stockage de données (5), chaque bloc étant lu à l'aide d'une dite configuration de modulation distincte du faisceau de lecture (1b), de manière à réaliser un démultiplexage desdits blocs de données ; **caractérisé en ce que** ledit support de stockage holographique (9) est un disque pouvant être actionné en rotation autour d'un axe (Z') et en translation perpendiculairement audit axe, lesdites plages de stockage de données (5) étant agencées en une pluralité de pistes concentriques (50, 51, 52) circulaires ou en spirale dont le centre coïncide avec ledit axe (Z').

11. Dispositif selon la revendication 10, dans lequel ledit support d'enregistrement optique (11B) est un disque pouvant être actionné en rotation autour d'un axe (Z) et comportant une pluralité de pistes circulaires concentriques (120, 121, 122), dont le centre coïncide avec ledit axe, chacune desdites pistes contenant une même succession d'éléments optiques diffractifs (12), le dispositif comportant également :

- un moyen (S) pour générer une pluralité de faisceaux de lecture (1), chacun d'entre eux étant dirigé de manière à traverser l'une des pistes (120, 121, 122) du support d'enregistrement optique (11B) pour être modulé spatialement ; et
- une pluralité de systèmes optiques (19), pour diriger chaque faisceau de lecture modulé spatialement sur une plage de stockage de données (5) appartenant à une piste (50, 51, 52) différente dudit support de stockage holographique (9B), et pour collecter la lumière diffractée par chaque plage, de manière à effectuer ladite lecture de données en parallèle sur plusieurs pistes du support de stockage holographique

12. Dispositif selon l'une des revendications 10 ou 11, dans lequel chacun des éléments optiques diffractifs introduisant une modulation du faisceau de lecture est un réseau de diffraction (12A, 12B, 12C) pour dévier ledit faisceau suivant un angle différent, de manière à réaliser un démultiplexage de blocs de données multiplexés en angle sur ladite plage de stockage (5).

13. Dispositif selon l'une des revendications 10 ou 11, dans lequel chacun des éléments optiques diffractifs (12D, 12E, 12F) introduisant une modulation du faisceau de lecture (1 b) est adapté pour introduire une modulation de l'amplitude complexe dudit faisceau sans modifier sensiblement sa direction de propagation, les configurations de modulation introduites par lesdits éléments optiques diffractifs étant sensiblement orthogonales entre elles de manière à réaliser un démultiplexage de blocs de données multiplexés en phase et/ou d'amplitude sur ladite plage de stockage (5).

14. Dispositif selon l'une des revendications 10 à 13, dans lequel ledit support d'enregistrement optique est un disque (11) pouvant être actionné en rotation autour d'un axe (Z), lesdits éléments optiques diffractifs (12) étant agencés circulairement autour dudit axe.

15. Dispositif selon la revendication 14 dans lequel les configurations de modulation introduites par lesdits éléments optiques diffractifs sont monodimensionnelles dans la direction de rotation du support d'enregistrement optique en forme de disque.

16. Dispositif selon la revendication 14, dans lequel chacun desdits éléments optiques diffractifs (12) est décomposé en une pluralité de sections successives ($12^1$, $12^2$, $12^3$, $12^4$) dont l'orientation varie pour compenser l'effet de la rotation dudit support d'enregistrement optique en forme de disque.

17. Dispositif selon l'une des revendications 10 à 16 dans lequel ledit faisceau de lecture (1 b) est diffracté vers l'avant par ladite ou chaque plage de stockage de données (5).

18. Dispositif selon l'une des revendications 10 à 16, dans lequel ledit faisceau de lecture (1 b) est diffracté vers l'arrière par ladite ou chaque plage de stockage de données (5).

19. Dispositif de réplication (R) d'un premier support de stockage holographique (9A) sur un deuxième support holographique (9B), ledit dispositif de réplication comportant un dispositif (E) d'enregistrement de données sur ledit deuxième support holographique (9B), selon l'une des revendications 1 à 9, dans lequel les moyens de génération et de modulation spatiale du ou des faisceaux objet sont constitués par un dispositif de lecture (L) dudit premier support de stockage holographique (9A) selon l'une des revendications 10 à 18.

FIG.1a

FIG.1b

FIG.2

FIG.3

FIG.4

**FIG.5**

EP 2 040 256 A1

## FIG.6a

FIG.6b

FIG.7a

FIG.7b

R

9B

11B

1B

E

2b/2

9A

L

1A

11A

# FIG.8a

FIG.8b

## FIG.9

# FIG.10

FIG.11a

FIG.11b

FIG.12

FIG.13

FIG.14a

FIG.14b

FIG.14c

FIG.14d

FIG.14e

$R_{i-1}$  $R_i$  $R_{i+1}$

FIG.15

FIG.16

FIG.17a

FIG.17b

FIG.17c

FIG.16b

FIG.18

Europäisches
Patentamt

European
Patent Office

Office européen
des brevets

## RAPPORT DE RECHERCHE EUROPEENNE

Numéro de la demande

EP 08 29 0894

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| X<br>A | EP 1 801 623 A (DAEWOO ELECTRONICS CORP [KR]) 27 juin 2007 (2007-06-27)<br>* alinéas [0018] - [0060]; figures 1,7 * | 1,10<br>2-9, 11-19 | INV.<br>G11B7/0065<br>G11B7/14<br>G03H1/12<br>G03H1/26<br>G11C13/04 |
| A | EP 1 732 068 A (SONY CORP [JP]) 13 décembre 2006 (2006-12-13)<br>* alinéas [0009], [0010], [0025] - [0059] * | 1-19 | |
| A | US 2007/127099 A1 (TSUKAGOSHI TAKUYA [JP]) 7 juin 2007 (2007-06-07)<br>* alinéas [0044] - [0056] * | 1,16 | |
| A | EP 1 473 714 A (DAEWOO ELECTRONICS CORP [KR]) 3 novembre 2004 (2004-11-03)<br>* alinéas [0023] - [0049] * | 1-19 | |
| A | EP 0 632 348 A (IBM [US]) 4 janvier 1995 (1995-01-04)<br>* colonnes 5-11 * | 1-19 | DOMAINES TECHNIQUES RECHERCHES (IPC)<br><br>G11B<br>G03H<br>G11C |

Le présent rapport a été établi pour toutes les revendications

| Lieu de la recherche | Date d'achèvement de la recherche | Examinateur |
|---|---|---|
| Munich | 8 décembre 2008 | Stemmer, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

34

**ANNEXE AU RAPPORT DE RECHERCHE EUROPEENNE
RELATIF A LA DEMANDE DE BREVET EUROPEEN NO.**

EP 08 29 0894

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-12-2008

| Document brevet cité au rapport de recherche | | Date de publication | Membre(s) de la famille de brevet(s) | | Date de publication |
|---|---|---|---|---|---|
| EP 1801623 | A | 27-06-2007 | CN | 1987535 A | 27-06-2007 |
| | | | JP | 2007172807 A | 05-07-2007 |
| | | | US | 2007147735 A1 | 28-06-2007 |
| EP 1732068 | A | 13-12-2006 | CN | 1934626 A | 21-03-2007 |
| | | | JP | 2005293630 A | 20-10-2005 |
| | | | WO | 2005096281 A1 | 13-10-2005 |
| | | | KR | 20070006758 A | 11-01-2007 |
| | | | US | 2007146838 A1 | 28-06-2007 |
| US 2007127099 | A1 | 07-06-2007 | JP | 2005099324 A | 14-04-2005 |
| | | | WO | 2005029202 A1 | 31-03-2005 |
| EP 1473714 | A | 03-11-2004 | CN | 1542855 A | 03-11-2004 |
| | | | GB | 2401241 A | 03-11-2004 |
| | | | JP | 3946181 B2 | 18-07-2007 |
| | | | JP | 2004335067 A | 25-11-2004 |
| | | | KR | 20040093771 A | 09-11-2004 |
| | | | US | 2004218241 A1 | 04-11-2004 |
| EP 0632348 | A | 04-01-1995 | JP | 7020765 A | 24-01-1995 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6700686 B

**Littérature non-brevet citée dans la description**

- **J. W. GOODMAN.** Introduction to Fourier Optics. Mc-Graw-Hill Book Company
- **S. YASUDA et al.** Coaxial holographic data storage without recording the de components. *Opt. Lett.,* 2006, vol. 31 (17), 2607-2609
- **Z. KARPATI et al.** Comparison of coaxial holographic storage arrangements from the M number consumption point of view. *Jpn. J. Appl Phys,* 2007, vol. 46, 3845-3849
- **C. DENZ et al.** Potentialities and limitations of hologram multiplexing by using the phase-encoding technique. *Appl. Opt.,* 1992, vol. 31, 5700-5705